# EUROPEAN PATENT SPECIFICATION

(11) **EP 1 774 752 B1**
(45) Date of publication and mention of the grant of the patent: **27.01.2010**
(21) Application number: 05763603.7
(22) Date of filing: 14.07.2005
(51) Int. Cl.: H04L 29/08

(54) **INSTANCE IDENTIFICATION**
INSTANZ-IDENTIFIKATION
IDENTIFICATION D'INSTANCE

(30) Priority: 20.07.2004 EP 04017106; 01.11.2004 US 976894
(43) Date of publication of application: 18.04.2007
(73) Proprietor: Nokia Corporation, 02150 Espoo (FI)
(72) Inventor: MUTIKAINEN, Jari, FIN-01830 Lepsämä (FI); GARCIA, Miguel, FIN-00690 Helsinki (FI); ISOMÄKI, Markus, FIN-02210 Espoo (FI)
(74) Representative: TBK-Patent
(86) International application number: PCT/IB2005/002008
(87) International publication number: WO 2006/011017

(56) References cited:
- WO-A-03/005669
- US-A1- 2003 159 067
- US-A1- 2003 229 787
- ROSENBERG DYNAMICSOFT J: "Obtaining and Using Globally Routable User Agent (UA) URIs (GRUU) in the Session Initiation Protocol (SIP)" IETF STANDARD-WORKING-DRAFT, INTERNET ENGINEERING TASK FORCE, IETF, CH, vol. sip, no. 2, 2 July 2004 (2004-07-02), XP015027750 ISSN: 0000-0004 cited in the application
- "Digital cellular telecommunications system (Phase 2+); Universal Mobile Telecommunications System (UMTS); IP Multimedia Subsystem (IMS); Stage 2 (3GPP TS 23.228 version 5.9.0 Release 5); ETSI TS 123 228" ETSI STANDARDS, EUROPEAN TELECOMMUNICATIONS STANDARDS INSTITUTE, SOPHIA-ANTIPO, FR, vol. 3-SA2, no. V590, June 2003 (2003-06), XP014007879 ISSN: 0000-0001

## Description

### BACKGROUND OF THE INVENTION:

### Field of the invention

The invention relates to a method for instance identification in a communication system, in particular in an Internet Protocol Multimedia Subsystem (IMS), and also to a corresponding network control element.

### Description of the related art

The invention relates to SIP (Session Initiation Protocol) and the 3GPP (Third Generation Partnership Project) IMS (Internet Protocol (IP) Multimedia Subsystem). In particular, the invention addresses a problem in IMS, which is described in the following by referring to an example.

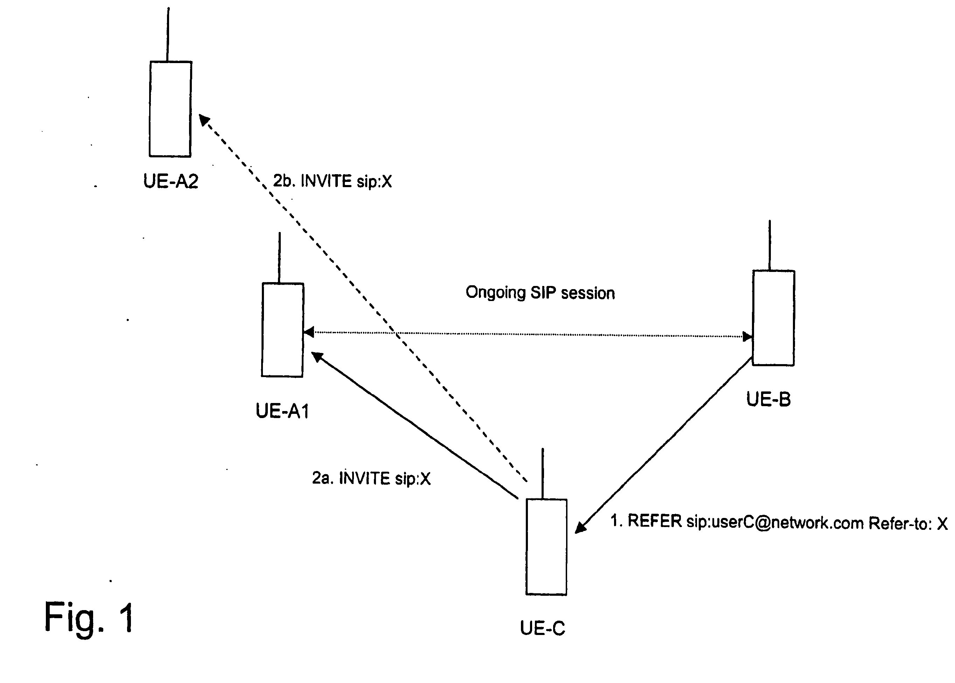

The basic situation for this is shown in Fig. 1. Now, it is assumed that a first user, John (A) has 2 devices, for example mobile phones, (UE-A1 and UE-A2) which are registered to the same Public User ID (e.g., sip:john@nokia.com), and there is ongoing session between John and a second user, Mary (B), having the device UE-B.

Now, during an ongoing SIP session, Mary transfers John to Hȧkan (C), having the device US-C. This is effected such that B sends a SIP REFER message (message 1 in Fig. 1) to user C. The REFER method indicates that the recipient (identified by the Request-URI) should contact a third party using the contact information provided in the request. The REFER message includes a Refer-to header field which provides a URL to a reference. In the present case, the Refer-to field indicates the Public User ID of user A, which is indicated in Fig. 1 by X.

The transferred session needs to go to that particular device (namely UE-A1). John was holding in his hands, not the other one.

However, the SIP INVITE message issued from UE-C in response to receiving the REFER message may go to both user entities of user A, as indicated by messages 2a and 2b in Fig. 1.

So far 3GPP IMS does not have a solution to this. In current 3GPP IMS, the transferred session can be routed to any of John's device, or to all of them (parallel forking), or to any set of them.

This can result in a break of the session.

The same problem exists when moving from one-to-one session to an ad-hoc multiparty session. A has multiple devices registered to the same Public User ID. A and B have an ongoing SIP session. B wants to add C to the same session. B needs to establish an ad-hoc conference and invite A and C to this conference session. To do this, B may send REFER to the Conference application server, which then sends INVITE to A and C. Again, this INVITE might be routed to any device A has registered to the Public User ID.

It is noted that a Globally Routable User Agent Uniform Resource Identifier (GRUU) standard is known. However, at present this cannot be applied as such in more advanced network (e.g., 3GPP IMS and 3GPP Multimedia Domain (MMD) due to their complex architecture and routing and identity requirements.

Document US 2003/0229787 A1 discloses a system and a method using a temporary identity for authentication with session initiation protocol, wherein a user's SIP URI is registered with a S-CSCF in the home network. A P-CSCF binds the user's SIP address with the host address. This document does not describe a GRUU.

Document "Obtaining and Using Globally Routable User Agent (UA) URIs (GRUU) in the Session Initiation Protocol (SIP)" by J. Rosenberg, describes the GRUU in more detail.

Document WO 03/005669 A1 discloses a method and system for handling multiple registrations, wherein each terminal is registered to a user by using different private identities.

### SUMMARY OF THE INVENTION

Hence, it is an object of the present invention to overcome this problem and to allow a reliable session even in case a user has a plurality of devices identified by the same Public User ID, in the context of a distributed architecture comprising several network elements, each of them having a particular role in the session setup procedure.

This object is solved by a method as set out in claim 1, alternatively by a generic control element as set out in claim 20 or further alternatively by a system as set out in claim 42.

Thus, according to the present invention, a so-called GRUU (Globally Routable UA (User Agent) URI (Uniform Resource Identifier)) is used for identifying an instance device. Namely, GRUU is a unique instance ID that is globally routable. GRUU has been defined by IETF (Internet Engineering Task Force) in specification draft-ietf-sip-gruu-01. Thus, in IMS, the GRUU points to the user equipment (i.e., the instance device) instead of the user. Therefore, the invention proposes the use of GRUU in 3GPP IMS and similar networks. The invention provides solutions for the problems created due to distributed architectures such as IMS. That is, in particular, the GRUU is related to the serving network control element of the instance in order to surely routing messages/communication to the instance through the serving network control element.

Therefore, by using the GRUU, it is possible to reliably start a session with a user equipment of a user, which comprises several user entities identified by the same Public User ID.

Further advantageous developments are set out in the dependent claims.

### BRIEF DESCRIPTION OF THE DRAWINGS

The invention is described by referring to the enclosed drawings, in which:
Fig. 1 shows a scenario where an ongoing SIP session is to be transferred to another party,
Fig. 2 shows a flowchart illustrating a procedure of generating a GRUU according to a first embodiment of the invention,
Fig. 3 shows a signal flow illustrating GRUU generation and GRUU usage according to the first embodiment of the invention,
Fig. 4 shows a signal flow illustrating GRUU generation and GRUU usage according to a second embodiment of the invention,
Fig. 5 shows a signal flow illustrating GRUU generation and GRUU usage according to a third embodiment of the invention, and
Fig. 6 shows a signal flow illustrating GRUU generation and GRUU usage according to a fourth embodiment of the invention.

### DETAILED DESCRIPTION OF THE PREFERRED EMBODIMENTS

In the following, preferred embodiments of the present invention is described by referring to the attached drawings.

According to a first embodiment of the invention, GRUU (Globally Routable UA (User Agent) URI (Uniform Resource Identifier)) is used for identifying a user equipment (UE)(as an example for an instance) for IMS sessions.

GRUU is a unique instance ID that is globally routable. A GRUU is generated by the SIP registrar (e.g., S-CSCF) at registration time, and transported to the User Agent (e.g., UE) for its usage at a later time. In IMS, a GRUU points to the UE instead of the user. A GRUU is valid for the duration of the UE registration.

In more detail, the definition of GRUU is as follows: A GRUU is a SIP URI that has a specific set of characteristics:
Global: It can be used by any UAC (User Agent Client) connected to the Internet. In that regard, it is like an Address-Of-Record (AOR) for a user. The address-of-record for a user, sip:joe@example.com, is meant to be used by anyone to call that user. The same is true for a GRUU.
Temporally Scoped: It may be temporally scoped. In that regard, it is not like an Address-Of-Record(AOR) for a user. The general assumption is that an AOR for a user is valid so long as the user resides within that domain (of course, policies can be imposed to limit its validity, but that is not the default case). However, a GRUU has a limited lifetime by default. It can never be valid for longer than the duration of the registration of the UA to which it is bound. For example, if a PC registers to the SIP network, a GRUU for this PC is only valid as long as the PC is registered. If the PC unregisters, the GRUU is invalid; calls to it would result in a 404 (Not Found) message. If the PC comes back, the GRUU will be valid once more. Furthermore, it will frequently be the case that the GRUU has a lifetime shorter than the duration of the registration.
Instance Routing: It routes to a specific UA instance, and never forks. In that regard, it is unlike an Address-Of-Record. When a call is made to a normal AOR which represents a user, routing logic is applied in proxies to deliver the call to one or more UAs. That logic can result in a different routing decision based on the time-of-day, or the identity of the caller. However, when a call is made to a GRUU, the routing logic is much more static. It has to cause the call to be delivered to a very specific UA instance. That UA instance has to be the same UA instance for any request sent to that GRUU. This does not mean that a GRUU represents a fundamentally different type of URI; it only means that the logic a proxy applies to a GRUU is going to generally be simpler than that it applies to a normal AOR.

Thus, the GRUU can be used at any time to force routing of SIP signalling to the same instance running at the same device that requests the GRUU. This allows the UA to execute call transfer, ad-hoc conferences and presence based initiated communications with the guarantee that the execution will end up in the required device, out of a collection of possible devices that the user may be using. In case there is a call transfer, ad-hoc conference or any presence initiated communication, the other party will contact the GRUU and the network will route to this specific instance in this specific UE.

However, adopting the GRUU in IMS introduces a problem that this invention solves, namely: since the GRUU is not a real public user identity registered in the HSS (Home Subscriber Server), any SIP (Session Initiation protocol) request addressed to a GRUU will make the I-CSCF (Interrogating Call/Session Control Function) to query the HSS asking for routing information. Such query will fail to provide the address of the S-CSCF (Serving CSCF) allocated to the user, since the HSS is not aware of GRUU.

In detail, the GRUU effectively is a Temporary Public User Identity allocated to the combination of the real Public User Identity and contact address. Generating and informing the UE of a GRUU does not represent a problem in IMS. However, if at a later stage, the UE populates the Contact header field of a SIP request (e.g., INVITE) with a GRUU, the remote User Agent will use the GRUU to route further signalling, and perhaps execute any of the mentioned services (e.g., call transfer, ad-hoc conference, etc.). This will not work in IMS, because a request that contains a GRUU in the Request-URI field will be received at an I-CSCF, which will send a Diameter query to the HSS requesting the address of the S-CSCF allocated to the user.

However, according to the prior art, the HSS only contains a database of real Public User Identities, but is not aware of GRUUs. Therefore the HSS will return a Diameter code "User unknown" and the I-CSCF will generate a SIP 404 Not Found response. As a consequence, the call transfer, ad-hoc conference, or such service will fail.

Therefore, according to the invention, the GRUU is related to the S-CSCF (as an example for a serving network control element) of the UE. This is described later in more detail by referring to first to fourth embodiments.

In the following, the basic principle of using GRUU for instance identification is described in the following by referring again to the flow shown in Fig. 1, in which an ongoing session between user A (having two devices UE-A1 and UE-A2 identified by the same Public User ID) and user B (having the device UE-B) should be transferred from user B to user C (having the device UE-C).

In the following, three possibilities for identifications to be included in the Refer-To header field of the REFER message sent from user B to user C are described. Refer-To contains 1) A's IP address 2) A's Public User ID 3) A's GRUU, as according to the present embodiment of the invention. Thus, after receiving the REFER message from user B, user C sends INVITE to the address indicated in the Refer-To header field.

Case 1) is not relevant, since it is not possible to use IP addresses for routing in IMS, since the IP address identifies the terminal and it is not possible to send SIP signalling to the terminal bypassing proxies (CSCFs).

In case 2), the INVITE request will be received by the S-CSCF where the user is registered. The S-CSCF will fork the request to any device user A has registered to the Public User ID, or to all of them, or to any set of them (in case there are more than two), depending whether the IMS supports callee capabilities, what are the registered callee capabilities in the devices, and what are the caller preferences.

However, only in case 3), i.e., use of the GRUU, it is guaranteed that the S-CSCF routes the INVITE request to the same device where A is having the session with B.

Therefore, the invention proposes the use of GRUU in 3GPP IMS and similar networks. The invention provides solutions for the problems created due to distributed architectures such as IMS.

In the following, it is described how the GRUU is made globally routable in IMS, and how the GRUU is bound to the Public User ID.

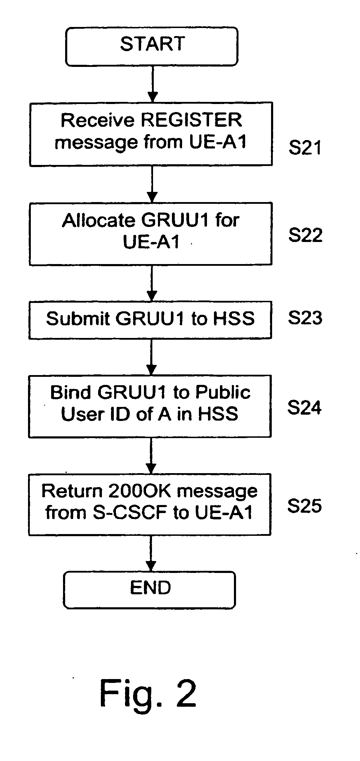

A procedure to make the GRUU globally routable in IMS and bind it to the user ID is described by referring to the flow chart shown in Fig. 2.

Once a S-CSCF (Serving Call/Session Control Function) gets the registrations (REGISTER method) from UE-A1 and UE-A2 (referring to the situation shown in Fig. 1), it allocates a GRUU for each of them. That is, when the S-CSCF receives the register message from UE-A1 in step S21, it allocates a GRUU1 for UE-A1 in step S22. For this purpose, the S-CSCF generates a GRUU where the domain part is the user's home domain name, e.g., network.com. The user part must be unique in this domain, and can be calculated as defined in GRUU Internet Draft document mentioned above (http://www.ietf.org/internet-drafts/draft-ietf-sip-gruu-01.txt). Effectively, the GRUU is a temporarily scoped Public User ID allocated to the user.

Once this is done, the S-CSCF submits the GRUU, i.e., GRUU1 in this example, to the HSS (Home Subscriber Server) over the Cx interface as part of a Diameter SAR (Server-Assignment-Request) message. This is shown in step S23. The HSS binds the GRUU1 to the Public User ID (step S24), which in turn is already bound to the S-CSCF allocated to the user.

Alternatively, HSS can allocate the GRUU once it receives the registration notification from the S-CSCF. In this case, the HSS returns the GRUU to the S-CSCF in a Diameter SAA (Server-Assignment-Answer) response. That is, the S-CSCF and the HSS are both examples for a generic control element according to the invention.

The S-CSCF generates a 200 OK response to the SIP REGISTER request. The response contains a new parameter in the Contact header field that conveys the allocated GRUU to the particular UA instance for the duration of the registration. This parameter is already defined in GRUU Internet draft mentioned above (step S25). The S-CSCF sends the response to the UE-A1 via the I-CSCF and the P-CSCF.

The same procedure is carried out for the UE-A2, i.e., when a REGISTER request is received from UE-A2. That is, the S-CSCF allocates a second different GRUU to UE-A2. In step S24, then GRUU2 is bound to the same Public User ID of A in the HSS.

The use of home network domain in the GRUU guarantees that initial requests are routed to an I-CSCF (Interrogating CSCF) located in the home network.

Thus, once the initial request is routed to the I-CSCF in user's home network, the I-CSCF uses the GRUU to query the HSS. The GRUU looks like any other Public User ID to the HSS, it is bound (perhaps indirectly, via a real Public User ID) to the S-CSCF allocated to the user. The HSS returns the address of the S-CSCF bound to the GRUU. The I-CSCF then forwards the SIP request to that S-CSCF.

Once the initial request is routed to the user's S-CSCF (in the above example, the S-CSCF of user A) using GRUU, the S-CSCF is aware (from the registration procedure) of the route to the particular UE (in the example of Fig. 1, UE-A1) and the UE contact IP address. The S-CSCF populates this stored route set to the Route header field, as per regular SIP procedures. The S-CSCF populates the Request-URI with the UE contact IP address and forwards the INVITE request to the next hop address.

That is, in the example of Fig. 1, the INVITE request originated by user C is sent to the correct UE of user A, namely UE-A1. Thus, only the INVITE request 2a is sent, and the INVITE request 2a is never sent to any UE (including the wrong user equipment UE-A2).

Hence, in this way, a terminating session as shown in Fig. 1 (where user C is trying to reach user A) can be properly conducted.

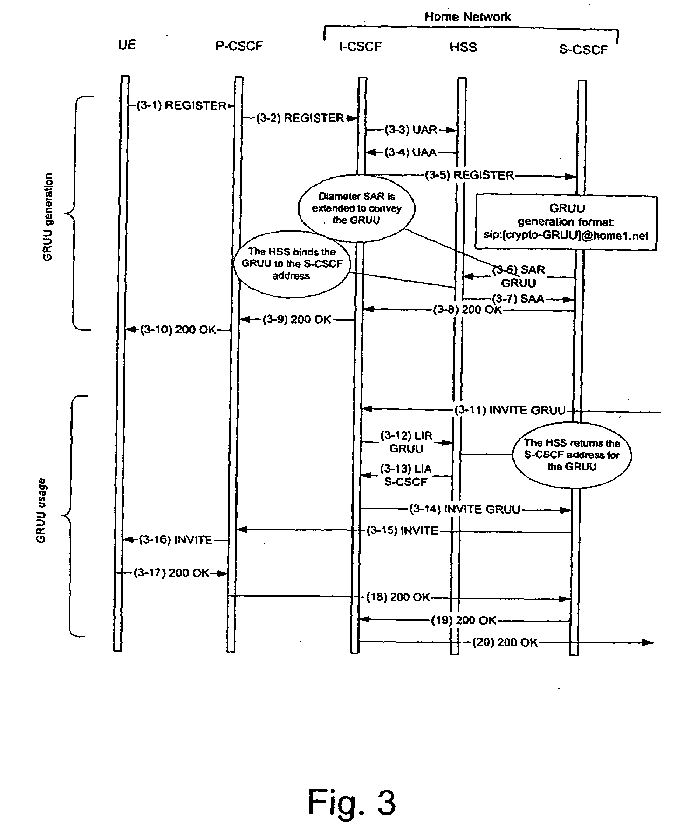

In the following, the procedures according to the first embodiment are described in more detail by referring to a signal flow shown in Fig. 3.

It is noted that in Fig: 3, 4, 5, and 6, in the sake of clarity, a first REGISTER request is omitted that is answered with a 401 response, since that sequence is not impacted by the merit of this invention. Such sequence should happen prior to the REGISTER request (message 3-1, 4-1, 5-1, 6-1) in Fig. 3, 4, 5, or 6.

In the upper part of Fig. 3, the GRUU generation is illustrated. In message (3-1), a SIP REGISTER request is forwarded from the UE to the P-CSCF (Proxy CSCF), which forwards the SIP REGISTER request to the I-CSCF in the home network of the user in message (3-2). The I-CSCF performs an authorization procedure, namely forwards a UAR (User Authorization Request) to the HSS in message (3-3), and the HSS responds with a UAA (User Authorization Answer) in message (3-4). After this is done, the I-CSCF forwards the SIP REGISTER request to the S-CSCF in message (3-5).

Then, the S-CSCF creates a GRUU that follows the pattern of the real Public User Identity, e.g., sip:[crypto-GRUU]@home1.net. The part "crypto GRUU" is also referred to in the following as GRUU user part and is a unique identifier for the instance in the domain of the user. The second part "home1.net" is an example for a home domain of the user. The S-CSCF is responsible to maintain a state of the GRUU in the HSS. That is, when the S-CSCF creates a GRUU, it informs the HSS (with a Diameter request) of the newly created GRUU, so the HSS is able to map the GRUU to the S-CSCF that keeps the user registration state. Hence, the HSS binds the GRUU to the S-CSCF.

This is performed by sending a Diameter SAR (Server Assignment Request) in message (3-6) to the HSS. The SAR message is extended to convey the GRUU. The HSS responds with a SAA command (Server Assignment Answer) in message (3-7). Thus, the S-CSCF knows that the binding of the GRUU to the S-CSCF is performed, and sends a 200 OK message (3-8) to the I-CSCF, which is forwarded to the P-CSCF in message (3-9) and to the UE in message (3-10). After this, the GRUU generation is completed.

When the Public User Identity de-registers (explicitly or due to a registration expiration), the S-CSCF also informs the HSS to remove any state associated to the GRUU.

Thus, when a SIP request addressed to the GRUU is received at the I-CSCF, the I-CSCF executes the regular procedures, as also shown in the lower part of signal flow shown in Fig. 3. That is, upon receiving a SIP request (message 3-11), which can a SIP INVITE request (as shown by 2a in Fig. 1), the I-CSCF contacts the HSS to find out the address of the S-CSCF that keeps the registration state of the URI included in the Request-URI. That is, the I-CSCF sends a LIR (Location Information Request) containing the GRUU in message (3-12) to the HSS. The HSS returns the address of the S-CSCF allocated to the GRUU in a LIA (Location Information Answer) (message 3-13). The I-CSCF does not replace the GRUU contained in the Request-URI field of the INVITE request. Thereafter, the INVITE request (including the GRUU) is forwarded to the S-CSCF (message 3-14). The S-CSCF finds the Contact UE out of the registration procedure of the GRUU, and then forwards the request to the P-CSCF (message 3-15). The P-CSCF forwards it to the UE (message 3-16), which responds with a 200 OK message (3-17). This 200 OK message is forwarded via the P-CSCF, the S-CSCF (message 3-18) and the I-CSCF (message 3-19) to the calling entity (message 3-20).

Thus, according to the first embodiment of the invention, the relation between the GRUU and the S-CSCF is established by binding the GRUU to the S-CSCF in the HSS.

In the following, a second embodiment is described according to which the first embodiment is modified. In detail, according to the second embodiment, the GRUU userpart is generated such that it contains S-CSCF ID.

In detail, the S-CSCF creates GRUU userparts, i.e. crypto-GRUU's based on a configured pattern, so that it can be used in I-CSCFs to locate the correct S-CSCF.

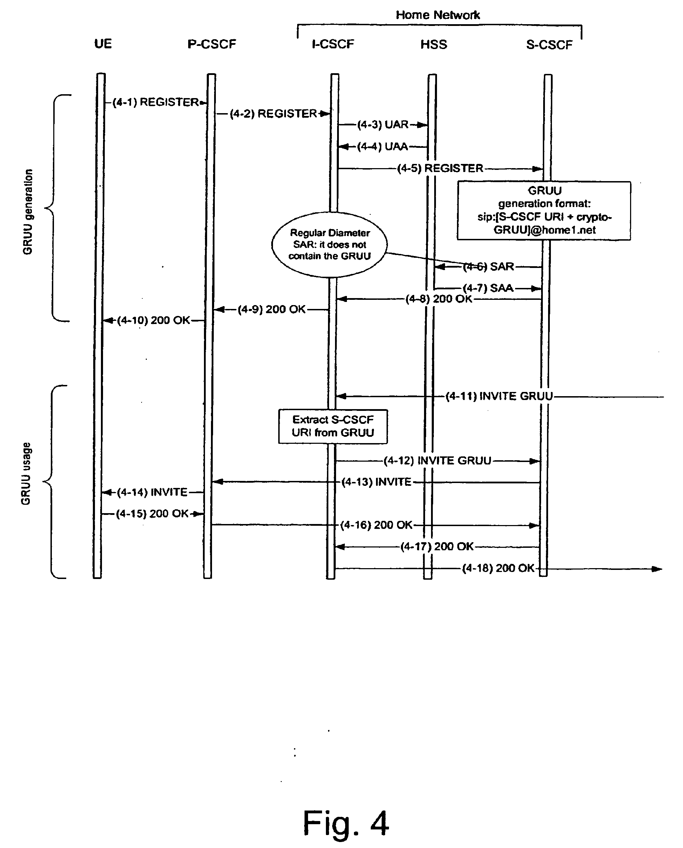

This is described in the following by referring to the signal flow shown in Fig. 4. The signal flow is basically the same as that of Fig. 3 according to the first embodiment, so that only differences to the first embodiment are described.

As mentioned above, the GRUU generation format differs to the first embodiment. That is, according to the second embodiment it is sip:[S-CSCF URI + crypto-GRUU]@home1.net. The SAR and SAA messages (4-6) and (4-7) are therefore regular Diameter SAR and SAA, since they do not contain the GRUU. The messages (4-1) to (4-5) and (4-8) to (4-10) are identical to the messages (3-1) to (3-5) and (3-8) to (3-10) according to the first embodiment.

The GRUU usage as shown in the lower part of Fig. 4 differs from that of Fig. 3. Namely, after receiving the INVITE Request (4-11), the I-CSCF determines that the Request-URI does not follow the pattern of a real Public User Identity, because the I-CSCF is able to extract the S-CSCF address from the GRUU. In this way, it is not necessary to send Diameter messages to the HSS, and no mapping between GRUUs and S-CSCFs at the HSS is required. That is, the messages (3-12) and (3-13) shown in Fig. 3 can be omitted.

After this, the normal procedures are carried out. That is, the messages (4-12) to (4-18) of Fig. 4 correspond to the messages (3-14) to (3-20) of Fig. 3.

Hence, according to the second embodiment of the invention, the relation between the GRUU and the S-CSCF is established by the S-CSCF when it includes the S-CSCF's ID into the GRUU.

A further possibility to solve the above problem is described in the following as a third embodiment of the invention. According to the third embodiment, a routable GRUU to the S-CSCF hostname is created, i.e., the S-CSCF creates a GRUU that provides direct routing to the S-CSCF hostname.

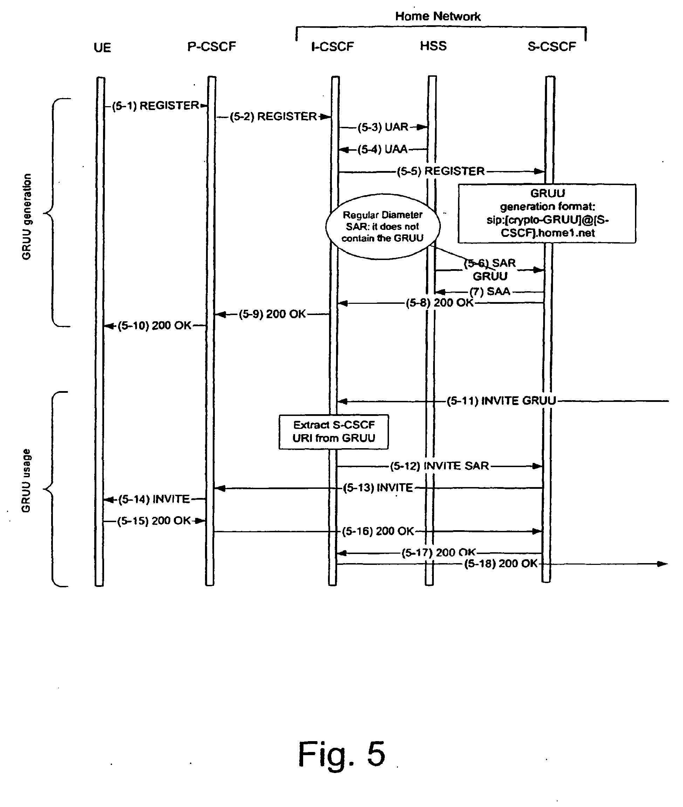

This is described in the following by referring to the signal flow shown in Fig. 5. The signal flow is similar to that of Fig. 4, so that in the following only the differences between the signal flow of Fig. 5 and Fig. 4 are described.

Upon the GRUU generation as shown in the upper part of Fig. 5, the S-CSCF creates a GRUU that provides direct routing to the IP address allocated to the S-CSCF. For instance, the GRUU may follow the pattern sip:[crypto-GRUU]@scscf1.home1.net. This approach does not require the S-CSCF to inform the HSS whenever a GRUU is created/deleted. That is, similar as in the signal flow of Fig. 4, the messages (5-6) and (5-7) are normal Diameter SAR and SAA and do not contain the GRUU. The messages (5-1) to (5-5) and (5-8) to (5-10) are similar to the messages (3-1) to (3-5) and (3-8) to (3-10) according to the first embodiment.

When a SIP request addressed to the GRUU is received at the I-CSCF (message 5-11), the I-CSCF determines that the Request-URI does not follow the pattern of a real Public User Identity, because the right hand side of the URI contains a hostname rather than a domain name. That is, the I-CSCF extracts the S-CSCF URI from the GRUU. Hence, the I-CSCF, instead of querying the HSS for routing information, forwards the request directly to the S-CSCF. The remaining procedures are basically the same as shown in Fig. 4. In message (5-12), the INVITE message comprises the SAR instead of the GRUU, since the S-CSCF URI was extracted from the GRUU. The messages (5-13) to (5-18) are similar to messages (4-13) to (4-18) according to the second embodiment.

According to the SIP routing procedures specified in RFC 3263, a UA or SIP proxy will do an NAPTR (Naming Authority Pointer (in DNS)), SRV (Service (record) in DNS) and AAAA (or A) DNS (Domain Name System) queries where the hostname (e.g., scscf1.home1.net) is the entry key. Therefore, this approach requires each home network to populate its DNS database with the NAPTR and SRV records of each S-CSCF in the network, pointing to the entry point in the network (typically the entry point is an I-CSCF).

This solution does require some more initial configuration, as it requires adding NAPTR and SRV records to each S-CSCF in the network. These records, otherwise, are not required for the operation of the DNS. Note that the A/AAAA records of all the S-CSCFs are required and already present in the DNS, but not necessarily the NAPTR and SRV records. The advantage of the solution according to the third embodiment is the lack of HSS involvement. Therefore, faster session setup times might be expected.

Thus, according to the third embodiment of the invention, the relation between the GRUU and the S-CSCF is established by creating a routable GRUU to the S-CSCF hostname.

In the following, a fourth embodiment is described, according to which a routable GRUU to the S-CSCF IP address is created.

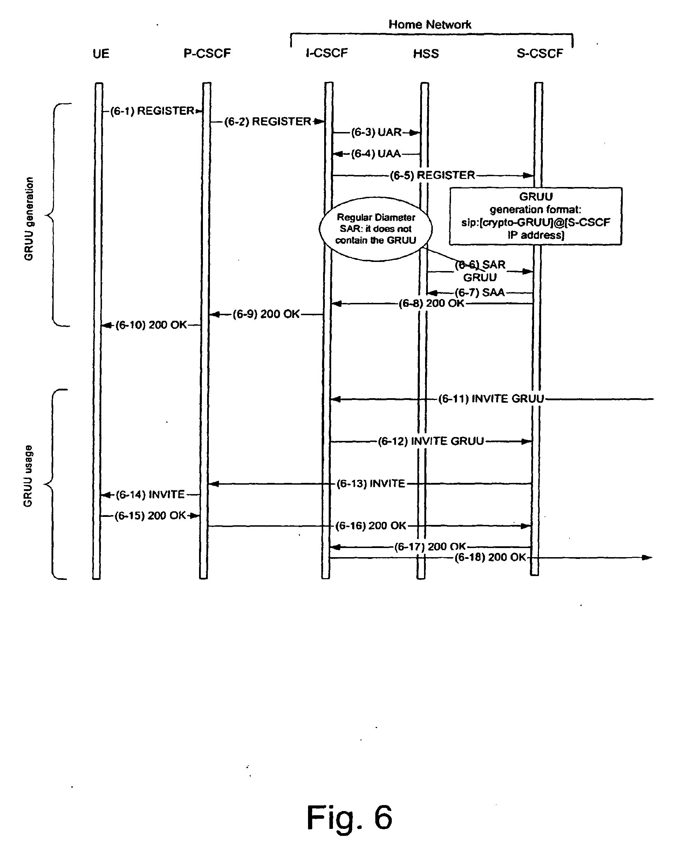

In detail, this solution is a slight variation of the solution described in the third embodiment: The GRUU that the S-CSCF creates contains an IP address rather than a hostname. For instance, the GRUU may follow the pattern sip:[crypto-GRUU]@[IP address]. This is illustrated in the signal flow shown in Fig. 6.

The messages (6-1) to (6-10) during the GRUU generation are the same as the messages (5-1) to (5-10) in Fig. 5, whereas only the format of the GRUU differs.

Upon using the GRUU, it is not necessary to extract the S-CSCF URI from the GRUU as according to the third embodiment. Since according to the fourth embodiment the GRUU is a routable GRUU to the S-CSCF IP address, the I-CSCF can simply forward the INVITE request to the S-CSCF in message (6-12), that is, in contrast to message (4-12) according to the second embodiment, the INVITE request in message (6-12) does not contain the GRUU. The remaining messages (6-11) and (6-13 to 6-18) are similar to the messages (5-11) and (5-13 to 5-18) according to the third embodiment.

Like according to the third embodiment, this approach does not require the S-CSCF to inform the HSS whenever a GRUU is created/deleted. Unlike the third embodiment, this solution does not require to configure the DNS by adding a NAPTR and SRV entries per S-CSCF. However, it requires the home network to configure the firewalls so that SIP signalling can reach directly each of the S-CSCFs in the network.

This solution is just a minor variation of the solution described above in connection with the third embodiment. It does not require the initial configuration of the DNS.

The invention is not limited to the embodiments described above, and various modifications are possible.

For example, the embodiments may be freely combined. For example, according to the first embodiment, the GRUU may be allocated or created alternatively also by a HSS. This can also be applied to the second, the third and the fourth embodiment, so that the GRUU is not created in the S-CSCF, but in the HSS. In this case, however, the S-CSCF has to be notified regarding the GRUU.

Moreover, it is noted that the user equipment described above is only an example for an instance, i.e., a particular network element.

Furthermore, S-CSCF is only an example for a serving network control element according to the invention. The generic control element according to the invention is, for example, an S-CSCF, I-CSCF, HSS etc., in which the basic operation according to the invention can be performed. Furthermore, the I-CSCF is an example for an edge control element according to the invention. The edge control element is a network element which provides access to the IMS (or a similar communication system) for the user equipment (i.e., the instance). The HSS is only an example for a central network element according to the invention. The central network element is an element which stores data regarding the instance.

Moreover, the IMS is only an example for a communication system. The invention may be applied in other communication systems, for example a Multimedia Domain (MMD) defined by 3GPP2.

## Claims

1. A method for instance identification in a session initiation protocol used in a communication system, comprising
using a globally routable user agent uniform resource identifier for uniquely identifying an instance, wherein the globally routable user agent uniform resource identifier is related to a serving network control element of the instance,
creating the globally routable user agent uniform resource identifier based on an identification of the serving network control element associated to a domain of the instance,
creating the globally routable user agent uniform resource identifier based on a public user Identity and contact information supplied by the instance;
binding the globally routable user agent uniform resource identifier to the serving network control element of the instance; and
binding the globally routable user agent uniform resource identifier to a public user identification.

2. The method according to claim 1, wherein the globally routable user agent uniform resource identifier comprises two parts, a first part being based on an identification of the serving network control element, and a second part being a unique identifier for the instance.

3. The method according to claim 1, wherein the globally routable user agent uniform resource identifier comprises a routable identifier to a hostname of the serving network control element.

4. The method according to claim 1, wherein the globally routable user agent uniform resource identifier comprises a routable identifier to an Internet protocol address of the serving network control element.

5. The method according to claim 1, wherein the globally routable user agent uniform resource identifier is created by the serving network control element.

6. The method according to claim 1, further comprising supplying the created globally routable user agent uniform resource identifier to a central network element of a user of the instance.

7. The method according to claim 1, further comprising supplying the created globally routable user agent uniform resource identifier to the instance.

8. The method according to claim 1, wherein the globally routable user agent uniform resource identifier is created by a central network element of a user.

9. The method according to claim 8 wherein the globally routable user agent uniform resource identifier created by the central network element of the user is supplied to the serving network control element of the user.

10. The method according to claim 1, wherein the instance comprises a user equipment.

11. The method according to claim 1, wherein the serving network control element is a serving call/session control function.

12. The method according to claim 8, wherein the central network element is a home subscriber server.

13. The method according to claim 1, wherein the communication system is an Internet protocol multimedia subsystem.

14. The method according to claim 1, further comprising:
receiving, at an edge control element, a communication message to the instance;
determining the serving network control element of the instance based on a relation between the globally routable user agent uniform resource identifier and serving network control element of the instance; and
forwarding the communication message to the determined serving network control element of the instance.

15. The method according to claim 14, wherein the relation is a binding between the GRUU and the serving network control element, and the determining step further comprises the steps of:
accessing a central network element of a user of the instance; and
receiving an identification of the serving network control element from the central network element.

16. The method according to claim 14, wherein the relation is that the globally routable user agent uniform resource identifier contains an identification of the serving network control element, and the determining step further comprises the step of:
extracting an identification of the serving network control element from the globally routable user agent uniform resource identifier.

17. The method according to claim 16, wherein the identification contains a routable identifier to a hostname of the serving network control element.

18. The method according to claim 16, wherein the identification contains a routable identifier to an Internet Protocol address of the serving network control element.

19. The method according to claim 14, wherein the edge control element is an interrogating call/session control function.

20. A generic control element comprising:
means for identifying an instance by using a globally routable user agent uniform resource identifier in a session initiation protocol , and
means for relating the globally routable user agent uniform resource identifier to a serving network control element of the instance,
wherein the globally routable user agent uniform resource identifier is based on an identification of the serving network control element associated with a domain of the instance, further comprising:
creating means for creating the globally routable user agent uniform resource identifier based on the public user identity and a contact information supplied by the instance, wherein
the globally routable user agent uniform resource identifier is bound to the serving network control element of the instance, and to the public user identity.

21. The generic control element according to claim 20, wherein the globally routable user agent uniform resource identifier comprises two parts, a first part being based on the identification of the serving network control element, and a second part being a unique identifier for the instance.

22. The generic control element according to claim 20, wherein the globally routable user agent uniform resource identifier comprises a routable identifier to a hostname of the serving network control element.

23. The generic control element according to claim 20, wherein the globally routable user agent uniform resource identifier comprises a routable identifier to an Internet protocol address of the serving network control element.

24. The generic control element according to claim 20, wherein the generic control element is the serving network control element.

25. The generic control element according to claim 20, further comprising means for supplying the created globally routable user agent uniform resource identifier to a central network element of the user.

26. The generic control element according to claim 20, further comprising means for supplying the created globally routable user agent uniform resource identifier to the instance.

27. The generic control element according to claim 20, wherein the generic control element is a central network element.

28. The generic control element according to claim 25, wherein the central network element comprises means for binding the globally routable user agent uniform resource identifier to the serving network control element.

29. The generic control element according to claim 27, wherein the central network element comprises means for binding the globally routable user agent uniform resource identifier to the serving network control element.

30. The generic control element according to claim 27, further comprising means for supplying the created globally routable user agent uniform resource identifier to a serving network control element of the user.

31. The generic control element according to claim 25 or 27, wherein the central network element is a home subscriber server.

32. The generic control element according to claim 20, wherein the instance comprises a user equipment.

33. The generic control element according to claim 20, wherein the serving network control element is a serving call/session control function.

34. The generic control element according to claim 21, wherein a communication system is an Internet protocol multimedia subsystem.

35. The generic control element according to claim 20, further comprising:
means for receiving a communication message to the instance;
means for determining the serving network control element of the instance based on a relation between the GRUU and the serving network control element of the instance; and
means for forwarding the communication message to the determined serving network control element of the instance.

36. The generic control element according to claim 35, wherein the relation is a binding between the globally routable user agent uniform resource identifier and the serving network control element, and the determining means is configured to:
access a central network element of a user of the instance; and
receive an identification of the serving network control element from the central network element.

37. The generic control element according to claim 35, wherein the relation is that the globally routable user agent uniform resource identifier contains an identification of the serving network control element, and the determining means is configured to:
extract an identification of the serving network control element from the globally routable user agent uniform resource identifier.

38. The generic control element according to claim37, wherein the identification contains a routable identifier to the hostname of the serving network control element.

39. The generic control element according to claim 37, wherein the identification contains a routable identifier to an Internet protocol address of the serving network control element.

40. The generic control element according to claim 35, wherein the generic control element is an edge control element.

41. The generic control element according to claim 40, wherein the edge control element is an interrogating call/session control function.

42. A network system comprising:
a generic control element, wherein the generic control element comprises means for identifying an instance by using a globally routable user agent uniform resource identifier in a session initiation protocol, and the globally routable user agent uniform resource identifier is related to a serving network control element of the instance, wherein the globally routable user agent uniform resource identifier is based on an identification of the serving network control element associated with a domain of the instance; and
a central network element of a user of an instance device, wherein the central network element comprises means for binding the GRUU to the serving network control element in the central network element and creating means for creating the globally routable user agent uniform resource identifier based on a public user identity and a contact information supplied by the instance, wherein
the globally routable user agent uniform resource identifier is bound to the serving network control element of the instance, and to the public user identity.

43. The network system according to claim 42, wherein the generic control element is a serving network control element.

44. The network system according to claim 43, wherein the serving network control element is a serving call/session control function.

45. The network system according to claim 42, wherein the globally routable user agent uniform resource identifier comprises two parts, a first part being based on an identification of the serving network control element, and a second part being a unique identifier for the instance.

46. The network system according to claim 42, wherein the globally routable user agent uniform resource identifier comprises a routable identifier to a hostname of the serving network control element.

47. A computer program product for a processing device comprising software code portions for performing the method according to any one of the claims 1 to 19 when the program is run on the processing device.

## Patentansprüche

1. Verfahren zur Instanzenidentifikation in einem ein einem Kommunikationssystem verwendeten Sitzungsinitiierungsprotokoll, mit den Schritten:
Verwenden einer uniformen Ressourcenkennung für einen global verkehrslenkbaren Benutzeragenten zum eindeutigen Identifizieren einer Instanz, wobei die uniforme Ressourcenkennung für einen global verkehrslenkbaren Benutzeragenten auf ein bedienendes Netzwerksteuerelement der Instanz bezogen ist,
Erstellen der uniformen Ressourcenkennung für einen global verkehrslenkbaren Benutzeragenten auf der Grundlage einer Identifikation des bedienenden Netzwerksteuerelements, das einer Domäne der Instanz zugehörig ist,
Erstellen der uniformen Ressourcenkennung für einen global verkehrslenkbaren Benutzeragenten auf der Grundlage einer öffentlichen Benutzeridentität und von durch die Instanz bereitgestellten Kontaktinformationen,
Binden der uniformen Ressourcenkennung für einen global verkehrslenkbaren Benutzeragenten an das bedienende Netzwerksteuerelement der Instanz, und
Binden der uniformen Ressourcenkennung für einen global verkehrslenkbaren Benutzeragenten an eine öffentliche Benutzeridentifikation.

2. Verfahren gemäß Anspruch 1, wobei die uniforme Ressourcenkennung für einen global verkehrslenkbaren Benutzeragenten zwei Teile umfasst, wobei ein erster Teil auf einer Identifikation des bedienenden Netzwerksteuerelements basiert und ein zweiter Teil eine eindeutige Kennung für die Instanz ist.

3. Verfahren gemäß Anspruch 1, wobei die uniforme Ressourcenkennung für einen global verkehrslenkbaren Benutzeragenten eine verkehrslenkbare Kennung zu einem Host-Namen des bedienenden Netzwerksteuerelements umfasst.

4. Verfahren gemäß Anspruch 1, wobei die uniforme Ressourcenkennung für einen global verkehrslenkbaren Benutzeragenten eine verkehrslenkbare Kennung zu einer Internetprotokolladresse des bedienenden Netzwerksteuerelements umfasst.

5. Verfahren gemäß Anspruch 1, wobei die uniforme Ressourcenkennung für einen global verkehrslenkbaren Benutzeragenten durch das bedienende Netzwerksteuerelement erstellt wird.

6. Verfahren gemäß Anspruch 1, mit dem Schritt zum Zuführen der erstellten uniformen Ressourcenkennung für einen global verkehrslenkbaren Benutzeragenten zu einem zentralen Netzwerkelement eines Benutzers der Instanz.

7. Verfahren gemäß Anspruch 1, mit dem Schritt zum Zuführen der erstellten uniformen Ressourcenkennung für einen global verkehrslenkbaren Benutzeragenten zu der Instanz.

8. Verfahren gemäß Anspruch 1, wobei die uniforme Ressourcenkennung für einen global verkehrslenkbaren Benutzeragenten durch ein zentrales Netzwerkelement eines Benutzers erstellt wird.

9. Verfahren gemäß Anspruch 8, wobei die durch das zentrale Netzwerkelement erstellte, uniforme Ressourcenkennung für einen global verkehrslenkbaren Benutzeragenten dem bedienenden Netzwerksteuerelement des Benutzers zugeführt wird.

10. Verfahren gemäß Anspruch 1, wobei die Instanz eine Benutzereinrichtung umfasst.

11. Verfahren gemäß Anspruch 1, wobei das bedienende Netzwerksteuerelement eine bedienende Ruf-/ Sitzungssteuerfunktion ist.

12. Verfahren gemäß Anspruch 8, wobei das zentrale Netzwerkelement ein Heimatteilnehmerserver ist.

13. Verfahren gemäß Anspruch 1, wobei das Kommunikationssystem ein Internetprotokoll- Multimediasubsystem ist.

14. Verfahren gemäß Anspruch 1, mit den Schritten:
Empfangen, bei einem Randsteuerelement, einer Kommunikationsnachricht an die Instanz;
Bestimmen des bedienenden Netzwerksteuerelements der Instanz auf der Grundlage einer Beziehung zwischen der uniformen Ressourcenkennung für einen global verkehrslenkbaren Benutzeragenten und dem bedienenden Netzwerksteuerelement der Instanz; und
Weiterleiten der Kommunikationsnachricht zu dem bestimmten bedienenden Netzwerksteuerelement der Instanz.

15. Verfahren gemäß Anspruch 14, wobei die Beziehung eine Bindung zwischen der uniformen Ressourcenkennung für einen global verkehrslenkbaren Benutzeragenten und dem bedienenden Netzwerksteuerelement ist, und der Bestimmungsschritt die Schritte umfasst:
Zugreifen auf ein zentrales Netzwerkelement eines Benutzers der Instanz; und
Empfangen einer Identifikation des bedienenden Netzwerksteuerelements von dem zentralen Netzwerkelement.

16. Verfahren gemäß Anspruch 14, wobei die Beziehung darin besteht, dass die uniforme Ressourcenkennung für einen global verkehrslenkbaren Benutzeragenten eine Identifikation des bedienenden Netzwerksteuerelements umfasst, und der Bestimmungsschritt den Schritt umfasst:
Entnehmen einer Identifikation des bedienenden Netzwerksteuerelements aus der uniformen Ressourcenkennung für einen global verkehrslenkbaren Benutzeragenten.

17. Verfahren gemäß Anspruch 16, wobei die Identifikation eine verkehrslenkbare Kennung zu einem Host- Namen des bedienenden Netzwerksteuerelements umfasst.

18. Verfahren gemäß Anspruch 16, wobei die Identifikation eine verkehrslenkbare Kennung zu einer Internetprotokolladresse des bedienenden Netzwerksteuerelements umfasst.

19. Verfahren gemäß Anspruch 14, wobei das Randsteuerelement eine Abfrageruf-/ Sitzungssteuerfunktion ist.

20. Generisches Steuerelement mit:
einer Einrichtung zum Identifizieren einer Instanz unter Verwendung einer uniformen Ressourcenkennung für einen global verkehrslenkbaren Benutzeragenten in einem Sitzungsinitiierungsprotokoll, und
einer Einrichtung zum Beziehen der uniformen Ressourcenkennung für einen global verkehrslenkbaren Benutzeragenten auf ein bedienendes Netzwerksteuerelement der Instanz,
wobei die uniforme Ressourcenkennung für einen global verkehrslenkbaren Benutzeragenten auf einer Identifikation des bedienenden Netzwerksteuerelements basiert, das einer Domäne der Instanz zugehörig ist, mit:
einer Erstellungseinrichtung zum Erstellen der uniformen Ressourcenkennung für einen global verkehrslenkbaren Benutzeragenten auf der Grundlage der öffentlichen Benutzeridentität und von durch die Instanz bereitgestellten Kontaktinformationen, wobei
die uniforme Ressourcenkennung für einen global verkehrslenkbaren Benutzeragenten an das bedienende Netzwerksteuerelement der Instanz und an die öffentliche Benutzeridentität gebunden ist.

21. Generisches Steuerelement gemäß Anspruch 20, wobei die uniforme Ressourcenkennung für einen global verkehrslenkbaren Benutzeragenten zwei Teile umfasst, wobei ein erster Teil auf der Identifikation des bedienenden Netzwerksteuerelements basiert und ein zweiter Teil eine eindeutige Kennung für die Instanz ist.

22. Generisches Steuerelement gemäß Anspruch 20, wobei die uniforme Ressourcenkennung für einen global verkehrslenkbaren Benutzeragenten eine verkehrslenkbare Kennung zu einem Host- Namen des bedienenden Netzwerksteuerelements umfasst.

23. Generisches Steuerelement gemäß Anspruch 20, wobei die uniforme Ressourcenkennung für einen global verkehrslenkbaren Benutzeragenten eine verkehrslenkbare Kennung zu einer Internetprotokolladresse des bedienenden Netzwerksteuerelements umfasst.

24. Generisches Steuerelement gemäß Anspruch 20, wobei das generische Steuerelement das bedienende Netzwerksteuerelement ist.

25. Generisches Steuerelement gemäß Anspruch 20, mit einer Einrichtung zum Zuführen der erstellten uniformen Ressourcenkennung für einen global verkehrslenkbaren Benutzeragenten zu einem zentralen Netzwerkelement des Benutzers.

26. Generisches Steuerelement gemäß Anspruch 20, mit einer Einrichtung zum Zuführen der erstellten uniformen Ressourcenkennung für einen global verkehrslenkbaren Benutzeragenten zu der Instanz.

27. Generisches Steuerelement gemäß Anspruch 20, wobei das generische Steuerelement ein zentrales Netzwerkelement ist.

28. Generisches Steuerelement gemäß Anspruch 25, wobei das zentrale Netzwerkelement eine Einrichtung zum Binden der uniformen Ressourcenkennung für einen global verkehrslenkbaren Benutzeragenten an das bedienende Netzwerksteuerelement umfasst.

29. Generisches Steuerelement gemäß Anspruch 27, wobei das zentrale Netzwerkelement eine Einrichtung zum Binden der uniformen Ressourcenkennung für einen global verkehrslenkbaren Benutzeragenten an das bedienende Netzwerksteuerelement umfasst.

30. Generisches Steuerelement gemäß Anspruch 27, mit einer Einrichtung zum Zuführen der erstellten, uniformen Ressourcenkennung für einen global verkehrslenkbaren Benutzeragenten zu dem bedienenden Netzwerksteuerelement des Benutzers.

31. Generisches Steuerelement gemäß Anspruch 25 oder 27,
wobei das zentrale Netzwerkelement ein Heimatteilnehmerserver ist.

32. Generisches Steuerelement gemäß Anspruch 20, wobei die Instanz eine Benutzereinrichtung umfasst.

33. Generisches Steuerelement gemäß Anspruch 20, wobei das bedienende Netzwerksteuerelement eine bedienende Ruf-/Sitzungssteuerfunktion ist.

34. Generisches Steuerelement gemäß Anspruch 20, wobei ein Kommunikationssystem ein Internetprotokoll- Multimediasubsystem ist.

35. Generisches Steuerelement gemäß Anspruch 20, mit:
einer Einrichtung zum Empfangen einer Kommunikationsnachricht an die Instanz;
einer Einrichtung zum Bestimmen des bedienenden Netzwerksteuerelements der Instanz auf der Grundlage einer Beziehung zwischen der uniformen Ressourcenkennung für einen global verkehrslenkbaren Benutzeragenten und dem bedienenden Netzwerksteuerelement der Instanz; und
einer Einrichtung zum Weiterleiten der Kommunikationsnachricht zu dem bestimmten bedienenden Netzwerksteuerelement der Instanz.

36. Generisches Steuerelement gemäß Anspruch 35, wobei die Beziehung eine Bindung zwischen der uniformen Ressourcenkennung für einen global verkehrslenkbaren Benutzeragenten und dem bedienenden Netzwerksteuerelement ist, und die Bestimmungseinrichtung konfiguriert ist, um:
auf ein zentrales Netzwerkelement eines Benutzers der Instanz zuzugreifen; und um
eine Identifikation des bedienenden Netzwerksteuerelements von dem zentralen Netzwerkelement zu empfangen.

37. Generisches Steuerelement gemäß Anspruch 35, wobei die Beziehung darin besteht, dass die uniforme Ressourcenkennung für einen global verkehrslenkbaren Benutzeragenten eine Identifikation des bedienenden Netzwerksteuerelements umfasst, und die Bestimmungseinrichtung konfiguriert ist, um:
eine Identifikation des bedienenden Netzwerksteuerelements aus der uniformen Ressourcenkennung für einen global verkehrslenkbaren Benutzeragenten zu entnehmen.

38. Generisches Steuerelement gemäß Anspruch 37, wobei die Identifikation eine verkehrslenkbare Kennung zu dem Host- Namen des bedienenden Netzwerksteuerelements umfasst.

39. Generisches Steuerelement gemäß Anspruch 37, wobei die Identifikation eine verkehrslenkbare Kennung zu einer Internetprotokolladresse des bedienenden Netzwerksteuerelements umfasst.

40. Generisches Steuerelement gemäß Anspruch 35, wobei das generische Steuerelement ein Randsteuerelement ist.

41. Generisches Steuerelement gemäß Anspruch 40, wobei das Randsteuerelement eine Abfrageruf-/ Sitzungssteuerfunktion ist.

42. Netzwerksystem mit:
einem generischen Steuerelement, wobei das generische Steuerelement eine Einrichtung zum Identifizieren einer Instanz unter Verwendung einer uniformen Ressourcenkennung für einen global verkehrslenkbaren Benutzeragenten in einem Sitzungsinitiierungsprotokoll umfasst, und die uniforme Ressourcenkennung für einen global verkehrslenkbaren Benutzeragenten auf ein bedienendes Netzwerksteuerelement der Instanz bezogen ist, wobei die uniforme Ressourcenkennung für einen global verkehrslenkbaren Benutzeragenten auf einer Identifikation des bedienenden Netzwerksteuerelements basiert, das der Domäne der Instanz zugehörig ist; und
einem zentralen Netzwerkelement eines Benutzers einer Instanzvorrichtung, wobei das zentrale Netzwerkelement eine Einrichtung zum Binden der uniformen Ressourcenkennung für einen global verkehrslenkbaren Benutzeragenten an das bedienende Netzwerksteuerelement in dem zentralen Netzwerkelement und eine Erstellungseinrichtung zum Erstellen der uniformen Ressourcenkennung für einen global verkehrslenkbaren Benutzeragenten auf der Grundlage einer öffentlichen Benutzeridentität und von durch die Instanz bereitgestellten Kontaktinformationen umfasst, wobei
die uniforme Ressourcenkennung für einen global verkehrslenkbaren Benutzeragenten an das bedienende Netzwerksteuerelement der Instanz und an die öffentliche Benutzeridentität gebunden ist.

43. Netzwerksystem gemäß Anspruch 42, wobei das generische Steuerelement ein bedienendes Netzwerksteuerelement ist.

44. Netzwerksystem gemäß Anspruch 43, wobei das bedienende Netzwerksteuerelement eine bedienende Ruf-/ Sitzungssteuerfunktion ist.

45. Netzwerksystem gemäß Anspruch 42, wobei die uniforme Ressourcenkennung für einen global verkehrslenkbaren Benutzeragenten zwei Teile umfasst, wobei ein erster Teil auf einer Identifikation des bedienenden Netzwerksteuerelements basiert und ein zweiter Teil eine eindeutige Kennung für die Instanz ist.

46. Netzwerksystem gemäß Anspruch 42, wobei die uniforme Ressourcenkennung für einen global verkehrslenkbaren Benutzeragenten eine verkehrslenkbare Kennung zu einem Host- Namen des bedienenden Netzwerksteuerelements umfasst.

47. Computerprogrammprodukt für eine Verarbeitungsvorrichtung, mit Softwarecodeabschnitten zum Durchführen des Verfahrens gemäß zumindest einem der Ansprüche 1 bis 19, wenn das Programm auf der Verarbeitungsvorrichtung läuft.

## Revendications

1. Procédé d'identification d'instance dans un protocole d'initiation de session utilisé dans un système de communication, comprenant les étapes consistant à :
utiliser un identifiant de ressource uniforme d'agent d'utilisateur routable mondialement pour identifier de manière unique une instance, dans lequel l'identifiant de ressource uniforme d'agent d'utilisateur routable mondialement est lié à un élément de commande de réseau de service de l'instance ;
créer l'identifiant de ressource uniforme d'agent d'utilisateur routable mondialement sur la base d'une identification de l'élément de commande de réseau de service associé à un domaine de l'instance,
créer l'identifiant de ressource uniforme d'agent d'utilisateur routable mondialement sur la base d'une identité d'utilisateur public et d'informations de contact fournies par l'instance ;
relier l'identifiant de ressource uniforme d'agent d'utilisateur routable mondialement à l'élément de commande de réseau de service de l'instance ; et
relier l'identifiant de ressource uniforme d'agent d'utilisateur routable mondialement à une identification d'utilisateur public.

2. Procédé selon la revendication 1, dans lequel l'identifiant de ressource uniforme d'agent d'utilisateur routable mondialement comprend deux parties, une première partie étant basée sur une identification de l'élément de commande de réseau de service, et une deuxième partie étant un identifiant unique pour l'instance.

3. Procédé selon la revendication 1, dans lequel l'identifiant de ressource uniforme d'agent d'utilisateur routable mondialement comprend un identifiant routable pour un nom d'hôte de l'élément de commande de réseau de service.

4. Procédé selon la revendication 1, dans lequel l'identifiant de ressource uniforme d'agent d'utilisateur routable mondialement comprend un identifiant routable pour une adresse de protocole Internet de l'élément de commande de réseau de service.

5. Procédé selon la revendication 1, dans lequel l'identifiant de ressource uniforme d'agent d'utilisateur routable mondialement est créé par l'élément de commande de réseau de service.

6. Procédé selon la revendication 1, comprenant en outre l'étape consistant à fournir l'identifiant de ressource uniforme d'agent d'utilisateur routable mondialement créé à un élément de réseau central d'un utilisateur de l'instance.

7. Procédé selon la revendication 1, comprenant en outre l'étape consistant à fournir l'identifiant de ressource uniforme d'agent d'utilisateur routable mondialement créé à l'instance.

8. Procédé selon la revendication 1, dans lequel l'identifiant de ressource uniforme d'agent d'utilisateur routable mondialement est créé par un élément de réseau central d'un utilisateur.

9. Procédé selon la revendication 8, dans lequel l'identifiant de ressource uniforme d'agent d'utilisateur routable mondialement créé par l'élément de réseau central de l'utilisateur est fourni à l'élément de commande de réseau de service de l'utilisateur.

10. Procédé selon la revendication 1, dans lequel l'instance comprend un équipement d'utilisateur.

11. Procédé selon la revendication 1, dans lequel l'élément de commande de réseau de service est une fonction de commande d'appel/session de service.

12. Procédé selon la revendication 8, dans lequel l'élément de réseau central est un serveur d'abonné domestique.

13. Procédé selon la revendication 1, dans lequel le système de communication est un sous-système multimédia de protocole Internet.

14. Procédé selon la revendication 1, comprenant en outre les étapes consistant à :
recevoir, au niveau d'un élément de commande de périphérie, un message de communication à l'instance ;
déterminer l'élément de commande de réseau de service de l'instance sur la base d'une relation entre l'identifiant de ressource uniforme d'agent d'utilisateur routable mondialement et l'élément de commande de réseau de service de l'instance ; et
transférer le message de communication à l'élément de commande de réseau de service déterminé de l'instance.

15. Procédé selon la revendication 14, dans lequel la relation est une liaison entre l'identifiant de ressource uniforme d'agent d'utilisateur routable mondialement GRUU et l'élément de commande de réseau de service, et l'étape de détermination comprend en outre les étapes consistant à :
accéder à un élément de réseau central d'un utilisateur de l'instance ; et
recevoir une identification de l'élément de commande de réseau de service de l'élément de réseau central.

16. Procédé selon la revendication 14, dans lequel la relation est que l'identifiant de ressource uniforme d'agent d'utilisateur routable mondialement contient une identification de l'élément de commande de réseau de service, et l'étape de détermination comprend en outre l'étape consistant à :
extraire une identification de l'élément de commande de réseau de service à partir de l'identifiant de ressource uniforme d'agent d'utilisateur routable mondialement.

17. Procédé selon la revendication 16, dans lequel l'identification contient un identifiant routable pour un nom d'hôte de l'élément de commande de réseau de service.

18. Procédé selon la revendication 16, dans lequel l'identification contient un identifiant routable pour une adresse de protocole Internet de l'élément de commande de réseau de service.

19. Procédé selon la revendication 14, dans lequel l'élément de commande de périphérie est une fonction de commande d'appel/session d'interrogation.

20. Elément de commande générique comprenant :
des moyens pour identifier une instance en utilisant un identifiant de ressource uniforme d'agent d'utilisateur routable mondialement dans un protocole d'initiation de session, et
des moyens pour lier l'identifiant de ressource uniforme d'agent d'utilisateur routable mondialement à l'élément de commande de réseau de service de l'instance,
dans lequel l'identifiant de ressource uniforme d'agent d'utilisateur routable mondialement est basé sur une identification de l'élément de commande de réseau de service associé à un domaine de l'instance, comprenant en outre :
un moyen de création pour créer l'identifiant de ressource uniforme d'agent d'utilisateur routable mondialement sur la base de l'identité d'utilisateur public et d'informations de contact fournies par l'instance, dans lequel
l'identifiant de ressource uniforme d'agent d'utilisateur routable mondialement est relié à l'élément de commande de réseau de service de l'instance, et à l'identité d'utilisateur public.

21. Elément de commande générique selon la revendication 20, dans lequel l'identifiant de ressource uniforme d'agent d'utilisateur routable mondialement comprend deux parties, une première partie étant basée sur l'identification de l'élément de commande de réseau de service, et une deuxième partie étant un identifiant unique pour l'instance.

22. Elément de commande générique selon la revendication 20, dans lequel l'identifiant de ressource uniforme d'agent d'utilisateur routable mondialement comprend un identifiant routable pour un nom d'hôte de l'élément de commande de réseau de service.

23. Elément de commande générique selon la revendication 20, dans lequel l'identifiant de ressource uniforme d'agent d'utilisateur routable mondialement comprend un identifiant routable pour une adresse de protocole Internet de l'élément de commande de réseau de service.

24. Elément de commande générique selon la revendication 20, dans lequel l'élément de commande générique est l'élément de commande de réseau de service.

25. Elément de commande générique selon la revendication 20, comprenant en outre des moyens pour fournir l'identifiant de ressource uniforme d'agent d'utilisateur routable mondialement créé à un élément de réseau central de l'utilisateur.

26. Elément de commande générique selon la revendication 20, comprenant en outre des moyens pour fournir l'identifiant de ressource uniforme d'agent d'utilisateur routable mondialement créé à l'instance.

27. Elément de commande générique selon la revendication 20, dans lequel l'élément de commande générique est un élément de réseau central.

28. Elément de commande générique selon la revendication 25, dans lequel l'élément de réseau central comprend des moyens pour relier l'identifiant de ressource uniforme d'agent d'utilisateur routable mondialement à l'élément de commande de réseau de service.

29. Elément de commande générique selon la revendication 27, dans lequel l'élément de réseau central comprend des moyens pour relier l'identifiant de ressource uniforme d'agent d'utilisateur routable mondialement à l'élément de commande de réseau de service.

30. Elément de commande générique selon la revendication 27, comprenant en outre des moyens pour fournir l'identifiant de ressource uniforme d'agent d'utilisateur routable mondialement créé à un élément de commande de réseau de service de l'utilisateur.

31. Elément de commande générique selon la revendication 25 ou 27, dans lequel l'élément de réseau central est un serveur d'abonné domestique.

32. Elément de commande générique selon la revendication 20, dans lequel l'instance comprend un équipement d'utilisateur.

33. Elément de commande générique selon la revendication 20, dans lequel l'élément de commande de réseau de service est une fonction de commande d'appel/session de service.

34. Elément de commande générique selon la revendication 21, dans lequel un système de communication est un sous-système multimédia de protocole Internet.

35. Elément de commande générique selon la revendication 20, comprenant en outre :
des moyens pour recevoir un message de communication à l'instance ;
des moyens pour déterminer l'élément de commande de réseau de service de l'instance sur la base d'une relation entre l'identifiant de ressource uniforme d'agent d'utilisateur routable mondialement GRUU et l'élément de commande de réseau de service de l'instance ; et
des moyens pour transférer le message de communication à l'élément de commande de réseau de service déterminé de l'instance.

36. Elément de commande générique selon la revendication 35, dans lequel la relation est une liaison entre l'identifiant de ressource uniforme d'agent d'utilisateur routable mondialement et l'élément de commande de réseau de service, et les moyens de détermination sont configurés pour :
accéder à un élément de réseau central d'un utilisateur de l'instance ; et
recevoir une identification de l'élément de commande de réseau de service en provenance de l'élément de réseau central.

37. Elément de commande générique selon la revendication 35, dans lequel la relation est que l'identifiant de ressource uniforme d'agent d'utilisateur routable mondialement contient une identification de l'élément de commande de réseau de service, et les moyens de détermination sont configurés pour :
extraire une identification de l'élément de commande de réseau de service à partir de l'identifiant de ressource uniforme d'agent d'utilisateur routable mondialement.

38. Elément de commande générique selon la revendication 37, dans lequel l'identification contient un identifiant routable pour un nom d'hôte de l'élément de commande de réseau de service.

39. Elément de commande générique selon la revendication 37, dans lequel l'identification contient un identifiant routable pour une adresse de protocole Internet de l'élément de commande de réseau de service.

40. Elément de commande générique selon la revendication 35, dans lequel l'élément de commande générique est un élément de commande de périphérie.

41. Elément de commande générique selon la revendication 40, dans lequel l'élément de commande de périphérie est une fonction de commande d'appel/session d'interrogation.

42. Système de réseau comprenant :
un élément de commande générique, dans lequel l'élément de commande générique comprend des moyens pour identifier une instance en utilisant un identifiant de ressource uniforme d'agent d'utilisateur routable mondialement dans un protocole d'initiation de session, et l'identifiant de ressource uniforme d'agent d'utilisateur routable mondialement est lié à un élément de commande de réseau de service de l'instance, dans lequel l'identifiant de ressource uniforme d'agent d'utilisateur routable mondialement est basé sur une identification de l'élément de commande de réseau de service associée à un domaine de l'instance ; et
un élément de réseau central d'un utilisateur d'un dispositif d'instance, dans lequel l'élément de réseau central comprend des moyens pour relier l'identifiant de ressource uniforme d'agent d'utilisateur routable mondialement GRUU à l'élément de commande de réseau de service dans l'élément de réseau central et des moyens de création pour créer l'identifiant de ressource uniforme d'agent d'utilisateur routable mondialement sur la base d'une identité d'utilisateur public et d'informations de contact fournies par l'instance, dans lequel
l'identifiant de ressource uniforme d'agent d'utilisateur routable mondialement est relié à l'élément de commande de réseau de service de l'instance, et à l'identité d'utilisateur public.

43. Système de réseau selon la revendication 42, dans lequel l'élément de commande générique est un élément de commande de réseau de service.

44. Système de réseau selon la revendication 43, dans lequel l'élément de commande de réseau de service est une fonction de commande d'appel/session de service.

45. Système de réseau selon la revendication 42, dans lequel l'identifiant de ressource uniforme d'agent d'utilisateur routable mondialement comprend deux parties, une première partie étant basée sur une identification de l'élément de commande de réseau de service, et une deuxième partie étant un identifiant unique pour l'instance.

46. Système de réseau selon la revendication 42, dans lequel l'identifiant de ressource uniforme d'agent d'utilisateur routable mondialement comprend un identifiant routable pour un nom d'hôte de l'élément de commande de réseau de service.

47. Produit de programme informatique pour un dispositif de traitement comprenant des parties de code logiciel pour mettre en oeuvre le procédé selon l'une quelconque des revendications 1 à 19 lorsque le programme est exécuté sur le dispositif de traitement.
